# EUROPEAN PATENT SPECIFICATION

(11) **EP 0 566 032 B1**
(45) Date of publication and mention of the grant of the patent: **25.02.1998**
(21) Application number: 93105833.3
(22) Date of filing: 08.04.1993
(51) Int. Cl.: G11B 23/00, G11B 7/26

(54) **Hub type optical disk and injection molding die for molding its disk substrate**
Optische Platte mit Nabe und Giessform zum Giessen ihres Plattensubstrats
Disque optique à moyen et moule d'injection pour mouler son substrat

(30) Priority: 13.04.1992 JP 92534/92
(43) Date of publication of application: 20.10.1993
(73) Proprietor: MATSUSHITA ELECTRIC INDUSTRIAL CO., LTD., Kadoma-shi, Osaka-fu, 571 (JP)
(72) Inventor: Goto, Yoshikazu, Hirakata-shi, Osaka-fu 573 (JP); Takizawa, Teruyuki, Neyagawa-shi, Osaka-fu 572 (JP)
(74) Representative: Eisenführ, Speiser & Partner

(56) References cited:
- EP-A- 0 216 708
- EP-A- 0 277 809
- EP-A- 0 386 971
- US-A- 3 475 741
- US-A- 4 654 733
- PATENT ABSTRACTS OF JAPAN vol. 016, no. 012 (P-1297) 13 January 1992 & JP-A-32 030 381 (RICOH) 14 October 1991
- PATENT ABSTRACTS OF JAPAN vol. 013, no. 188 (P-866) 8 May 1989 & JP-A-10 014 747 (SEIKO EPSON) 18 January 1989
- PATENT ABSTRACTS OF JAPAN vol. 015, no. 109 (M-1093) 15 March 1991 & JP-A-30 005 111 (MITSUBISHI) 10 January 1991
- PATENT ABSTRACTS OF JAPAN vol. 5, no. 92 (P-66) 16 June 1981 & JP-A-56 037 802 (PIONEER K.K.) 11 April 1981

## Description

### BACKGROUND OF THE INVENTION

The present invention relates to a hub type optical disk in which a hub made of magnetizable material is secured to a disk substrate and a method of producing the hub type optical disk.

In order to fix an optical disk to a recording and play back apparatus, a magnet clamping method is generally used in which the optical disk is fixed to a motor-driven turntable by utilizing magnetically absorbent force. In this method, a magnet is provided in the turntable and a hub type optical disk is employed in which a hub made of magnetizable material is secured to a disk substrate. In a known hub type optical disk disclosed in, for example, EP-A-0 386 971 representing the closest prior art from which the invention proceeds, a flat platelike disk substrate has a center hole and a recess is formed at the center hole on a recording face of the disk substrate. Thus, by inserting a cylindrical portion of a hub made of magnetizble material into the center hole such that a flange portion of the hub is accommodated in the recess, the hub and the disk substrate are bonded to each other. This prior art document further discloses that by attaching the recording faces of two these hub type optical disks to each other, a double-sided optical disk can be obtained. The disk substrate is produced by injection molding and has a thickness of 1.2 mm and a diameter of 86 mm, while the recess has a depth of 0.45 mm.

ISO standards stipulate that birefringence and warpage of the disk substrate do not exceed predetermined values for signal quality. In order to reduce birefringence and warpage of the disk substrate produced by injection molding, it is essential that local stress concentrations and temperature gradient changes are small at the time of molding. However, in the known disk substrate of the above mentioned arrangement, since a recess region of the disk substrate has a thickness smaller than that of the remaining region of the disk substrate, strain is readily generated in the vicinity of the recess region and thus, birefringence and warpage of the disk substrate may exceed the predetermined values.

Meanwhile, in order to obtain a high-density optical disk, a method is proposed in which thickness of the disk substrate is reduced and a lens having high numerical aperture (NA) is used. For example, if the disk substrate of the prior art document referred to above has a thickness of 0.6 mm, the recess region has a thickness of 0.15 mm (= 0.6 - 0.45) and thus, it becomes impossible to perform injection molding of the disk substrate. Meanwhile, even if this disk substrate could be produced by another method, it is difficult to use the disk substrate due to insufficient strength of the recess portion.

Furthermore, opposite faces of the known disk substrate are flat. Thus, in case the optical disk is accommodated in a cartridge as an optical disk cartridge, such a problem arises that a face of the disk substrate in a data area, upon which a light beam is incident, is damaged through its rubbing against the cartridge, thereby resulting in improper recording or play-back of signals. In order to solve this problem, ribs may be provided at other locations of the cartridge than that corresponding to the data area of the disk substrate so as to hold the beam incident face out of contact with the cartridge. However, in this case, as the cartridge becomes more complicated in structure and descent stroke of the optical disk cartridge is increased by height of the ribs at the time of loading of the optical disk cartridge. Hence, such an inconvenience is incurred that it is difficult to make the recording and play back apparatus smaller in thickness.

Generally, in the known disk substrate produced by injection molding, a concentric groove is formed between the center hole and the data area. This concentric groove is produced when a stamper holder for fixing to an injection molding die a stamper formed with the data area is transferred to the disk substrate. This concentric groove is likely to be subjected to stress concentration. Especially, in the case of a thin disk substrate, birefringence and vibrations of the disk substrate affecting control performance of an optical head adversely are apt to take place, thus resulting in deterioration of signal quality.

EP-A-0 516 329 (published on 2 December 1992 and thus disclosing prior art according to Article 54(3) EPC) describes a hub type optical disc comprising a single disk substrate which has a center hole, an area suitable for clamping disposed radially outwardly of the center hole and a data area disposed radially outwardly of the clamp area. A recess is formed at an inner peripheral portion of one face of the disk substrate which includes the clamp area while a projection is formed in the clamp area on the other face of the disk substrate. The thickness of the disk substrate is substantially uniform at the clamp area and the data area. The disc further comprises a hub, which is engageable with a disk mounting member of an optical disk apparatus, secured in the recess.

### Summary of the invention

Accordingly, an essential object of the present invention is to provide a hub type optical disk which lessens birefringence and warpage and includes a thin disk substrate for high-density recording.

In order to accomplish the above object, according to the present invention, there is provided a hub type optical disk comprising a pair of disk substrates each of which has a center hole, a clamp area disposed radially outwardly of the center hole and a data area disposed radially outwardly of the clamp area, wherein a recess is formed at an inner peripheral portion of one face of each of the disk substrates, which includes the clamp area, while a projection is formed in the clamp area on the other face of each of the disk substrates such that thickness of each of the disk substrates is substantially uniform at the clamp area and the data area, and a hub which is engageable with a disk mounting member of an optical disk apparatus and is secured in the recess, the recess having a guide face for receiving an outer periphery of the hub, wherein the disk substrates are attached to each other so as to enclose the hub.

According to a further aspect of the present invention, there is provided an injection molding die for performing injection molding of a disk substrate of a hub type optical disk as mentioned above by using a stamper, the injection molding die comprising a lower die to which the stamper is secured, a clamp for clamping an inner peripheral portion of the stamper to the lower die such that the clamp acts also as a die for molding the recess, and an upper die in which a portion confronting the clamp has a shape corresponding to that of the clamp.

By the above described arrangement of the present invention, since thickness of the disk substrate is made substantially uniform, occurrence of birefringence can be restrained. Furthermore, by making depth of the recess substantially identical with thickness of the data area of the disk substrate, rigidity of the disk substrate is improved. As a result, especially, in the case of a thin disk substrate, excellent resistance against vibrations can be obtained and accurate signals can be obtained from data tracks of the disk substrate.

Meanwhile, when the hub type optical disk is accommodated in a cartridge as an optical disk cartridge, the projection of the disk substrate is brought into contact with the cartridge so as to prevent the data area from coming into contact with the cartridge and thus, the data area is not damaged. Furthermore, since distance between the clamp area of the disk substrate and a face of a turntable can be lessened at the time of unloading of the optical disk cartridge, so that descent stroke of the optical disk cartridge is reduced and thus, an optical disk apparatus can be reduced in thickness.

In addition, since the hub can be secured in the recess formed to high precision by the injection molding die, concentricity of the data tracks can be obtained easily and highly accurately and thus, an inexpensive and reliable hub type optical disk can be obtained. Meanwhile, in the injection molding die, since the clamp portion for clamping the inner peripheral portion of the stamper to the lower die acts also as the die for molding the recess of the disk substrate, the disk substrate having the recess can be produced by a simple die construction. Furthermore, since a concentric groove formed on the disk substrate by the clamp portion in a known injection molding die is eliminated, an optical disk can be obtained which includes a disk substrate uniform in thickness and is least subjected to birefringence.

### BRIEF DESCRIPTION OF THE DRAWINGS

This object and features of the present invention will become apparent from the following description taken in conjunction with the preferred embodiments thereof with reference to the accompanying drawings, in which:
Fig. 1 is a sectional view of a hub type optical disk having two disk substrates, according to a preferred embodiment of the present invention;
Figs. 2a and 2b are sectional views showing an optical disk cartridge including the optical disk of Fig. 1 in a state prior to clamping of the optical disk and in a state of completion of clamping of the optical disk, respectively; and
Fig. 3 is a sectional view of an injection molding die for molding a disk substrate of Fig. 1.

Before the description of the present invention proceeds, it is to be noted that like parts are designated by like reference numerals throughout several views of the accompanying drawings.

### DETAILED DESCRIPTION OF THE INVENTION

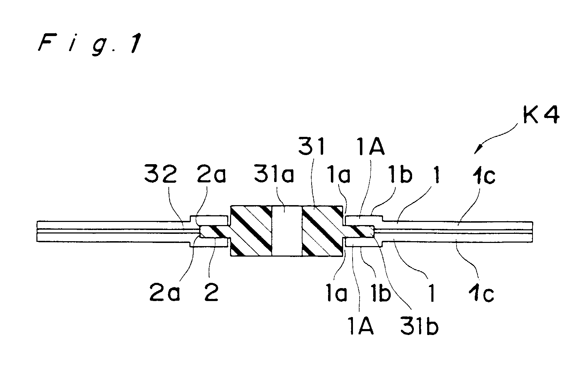

Referring now to the drawings, there is shown in Fig. 1, a double-sided hub type optical disk K4 having two disk substrates 1, according to a preferred embodiment of the present invention.

Each disk substrate 1 is of stepped shape and includes a center hole 1a, a clamp area 1b disposed radially outwardly of the center hole 1a and a data area 1c disposed radially outwardly of the clamp area 1b. In the data area 1c, concentric or spiral data tracks are formed. The data tracks of the data area 1c are formed at the time of injection molding of the disk substrate 1. In the case of an optical disk for play-back only, a reflecting layer made of aluminum is formed on the data tracks by sputtering or the like. Meanwhile, in the case of a write-once or rewritable optical disk, a recording layer is formed on the data tracks by sputtering, etc.

A recess 2 concentric with the center hole 1a is formed at an inner peripheral portion of the inner face of each disk substrate 1, which inner peripheral portion includes the clamp area 1b. In order to make thickness of each disk substrate 1 substantially uniform at the clamp area 1b and the data area 1c, a projection 1A is formed in the clamp area 1b on the other face of each disk substrate 1. Concentricity between the recess 2 and the data tracks is determined by production accuracy of a die of an injection molding machine to be described later and falls within a predetermined range leading to permissible eccentricity of the data tracks. In the die, a concentricity of about 20 µm can be achieved relatively easily.

The two disk substrates 1 are bonded to each other. A double-sided hub 31 having a center hole 31a for receiving a shaft 105a of a turntable 105 and a flange portion 31b provided at an axially central portion of the hub 31 is secured to the disk substrates 1. The side face 2a of the recess 2 of each of the disk substrates 1 is engageable with an outer periphery of the flange portion 31b of the hub 31. Thickness of the flange portion 31b is substantially equal to twice the depth of the recess 2 of each of the disk substrates 1. When the two disk substrates 1 have been attached to each other by an adhesive layer 32, a gap is defined between the opposed recesses 2 and the hub 31 is bonded to faces of this gap so as to be brought into engagement with the side faces 2a of the recesses 2. Known hot-melt coating, etc. may be employed for attaching the two disk substrates 1 to each other. Also in the optical disk K4, concentricity between the positioning hole 31a and the outer periphery of the flange portion 31b of the hub 31 is determined by production accuracy of a die for the hub 31 and falls within the predetermined range.

In the optical disk K4 of the above described arrangement, since the flange portion 31b of the hub 31 is brought into engagement with the side faces 2a of the recesses 2 of the two disk substrates 1, the data tracks of one disk substrate 1 are concentric with those of the other disk substrate 1 highly accurately. Therefore, eccentricity between the data tracks of one disk substrate 1 and those of the other disk substrate 1 also falls within a predetermined range. By using an optical disk apparatus provided with two optical heads, recording or play-back can be performed on the opposite faces of the double-sided optical disk K4 simultaneously.

By using the two disk substrates 1 each having the recess 2 and the hub 31 engageable with the recess 2 of each of the disk substrates 1 as described above, one disk substrate 1 can be concentric with the other substrate 1 highly accurately and thus, such a great effect can be obtained that recording or play-back can be performed on the opposite faces of the double-sided optical disk K4 simultaneously.

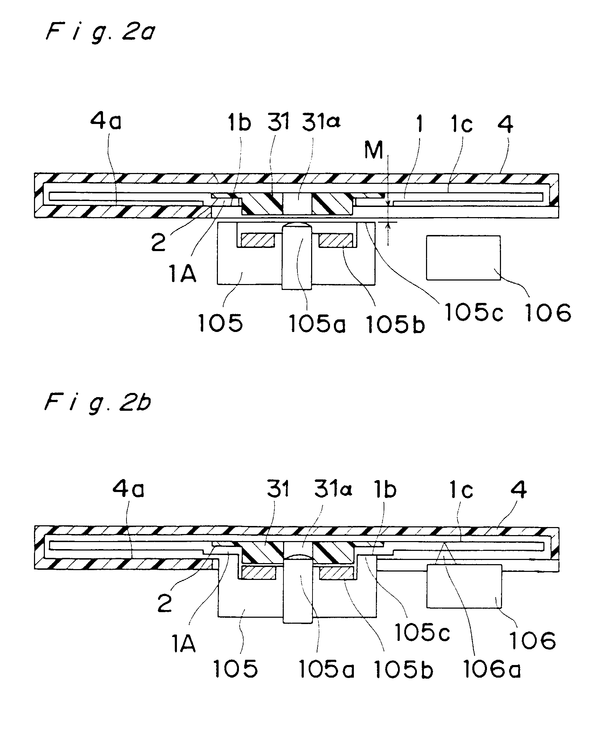

Operation of the optical disk is described with reference to figures 2a and 2b, hereinbelow. For sake of simplicity, the optical disk is depicted in these figures as a disk having one disk substrate only; however, the arrangement as shown in the figures 2a and 2b, of course, applies to the double-sided hub type optical disk K4 as described above.

In Figs. 2a and 2b, the optical disk is accommodated in a cartridge 4 as an optical disk cartridge. Fig. 2a shows a state prior to clamping of the optical disk, while Fig. 2b shows a state of completion of clamping of the optical disk. A lower inner face 4a of the cartridge 4, which confronts the disk substrate 1, can be brought into contact with the clamp area 1b of the disk substrate 1. The turntable 105 is constituted by the shaft 105a fitted into the positioning hole 31a of the hub 31, a magnet 105b for absorbing the hub 31 and a table face 105c brought into contact with the clamp area 1b of the disk substrate 1. By using a light beam 106a, signals of the data tracks of the disk substrate 1 are read by an optical head 106. Even if a lower face of the disk substrate 1 in the data area 1c, upon which the light beam 106a is incident, is allowed to be brought into contact with the lower inner face 4a of the cartridge 4 as shown in Fig. 2a, the projection 1A of the disk substrate 1 prevents the beam incident face of the disk substrate 1 from coming into contact with the lower inner face 4a of the cartridge 4. Therefore, the beam incident face of the disk substrate 1 in the data area 1c is not damaged through its rubbing against the cartridge 4.

After the optical disk cartridge has been loaded at a predetermined position of an optical disk apparatus as shown in Fig. 2a, the optical disk cartridge is further lowered to a state shown in Fig. 2b by a loading mechanism (not shown). This descent stroke of the optical disk cartridge depends on a distance M (Fig. 2a) between the table face 105c of the turntable 105 and the lower face of the projection 1A of the disk substrate 1. The lower inner face 4a of the cartridge 4 is flat and is brought into contact with the lower face of the projection 1A of the disk substrate 1. Thus, as compared with a known optical disk cartridge including a ribbed cartridge, descent stroke of the optical disk cartridge becomes smaller by height of the ribs. Therefore, descent stroke of the optical disk cartridge is smaller than that of conventional optical disk cartridges.

Meanwhile, during this descent of the optical disk cartridge, the shaft 105a of the turntable 105 is fitted into the positioning hole 31a of the hub 31 while the hub 31 is being absorbed by the magnet 105b. As a result, centering of the optical disk has been performed. Since concentricity between the data tracks and the positioning hole 31a of the hub 31 is so set as to fall within the predetermined range, the optical disk is centered positively. Thus, the projection 1A of the disk substrate 1 is brought into contact with the table face 105c of the turntable 105, whereby clamping of the optical disk is completed as shown in Fig. 2b. At the time of completion of clamping of the optical disk, the optical disk is held at a position where the optical disk is brought out of contact with the cartridge 4. Subsequently, the optical disk is rotated by the turntable 105 such that data signals on the optical disk are read by the optical head 106. Since the disk substrate 1 is of a boxlike shape having the recess 2 and the projection 1A, rigidity of the disk substrate 1 is larger than that of conventional flat disk substrates. Therefore, since the data area 1c of the disk substrate 1 is less likely to be vibrated against external vibrations and impacts, excellent read-out of signals can be performed.

As described above, since the recess 2 and the projection 1A are formed in the clamp area 1b of the disk substrate 1 such that thickness of the disk substrate 1 is substantially uniform at the clamp area 1b and the data area 1c, the disk substrate 1 has high quality least subjected to birefringence. Meanwhile, in case the optical disk is accommodated in the cartridge 4 as the optical disk cartridge, it is possible to bring the data area 1c of the disk substrate 1 and the cartridge 4 out of contact with each other without the need for providing ribs on the cartridge as in known optical disk cartridges. Thus, the cartridge 4 is structurally simplified. Meanwhile, since descent stroke of the optical disk cartridge during its loading can be reduced by height of the projection and the cartridge can be made smaller in thickness, the optical disk apparatus can be made smaller in thickness.

Furthermore, the recess 2 has the side face 2a engageable with the outer periphery of the flange portion of the hub 31 and the hub 31 having the positioning hole 31a for receiving the shaft 105a of the turntable 105 is secured in the recess 2. Therefore, concentricity between the side face 2a of the recess 2 of the disk substrate 1 and the data tracks and concentricity between the positioning hole 31a of the hub 31 and the outer periphery of the hub 31, which fall within the predetermined ranges, can be easily obtained by production accuracy of the dies. Accordingly, without the need for bonding the hub 31 to the disk substrate 1 by using a known hub bonding device while measuring eccentricity of the data tracks of the disk substrate 1, the optical disk having minimum eccentricity of the data tracks can be produced at low cost.

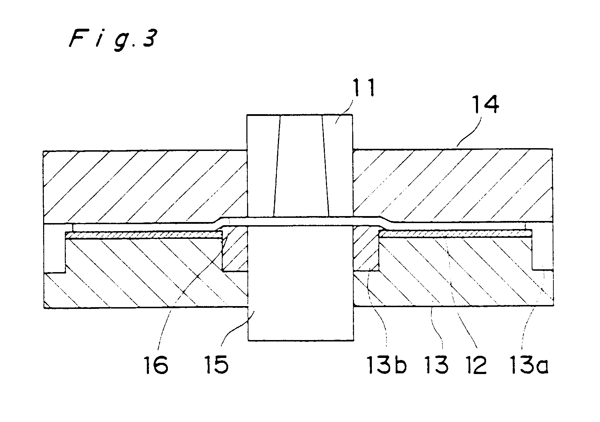

Hereinbelow, an injection molding method suitable for production of a disk substrate 1 of the optical disk is described with reference to Fig. 3. An injection molding die includes a spool 11 for supplying high-temperature liquid resin, a lower die 13 on which a stamper 12 formed with the data tracks is mounted, an upper die 14 and a punch 15 for forming the center hole 1a of the disk substrate 1. In the lower die 13, an outer clamp 13a for clamping an outer peripheral portion of the stamper 12 to the lower die 13 and an inner clamp 13b for clamping an inner peripheral portion of the stamper 12 to the lower die 13 are further provided. A stamper clamping portion of the inner clamp 13b is tapered. When the inner peripheral portion of the stamper 12 has been clamped by the inner clamp 13b, an upper face of the inner clamp 13b is disposed higher than that of the stamper 12. An upper face of the punch 15 is flush with that of the inner clamp 13b so as to be also disposed higher than that of the stamper 12. A cavity 16 corresponding to shape of the inner clamp 13b is formed at an inner peripheral portion of a lower face of the upper die 14 and a distal end face of the spool 11 is so set as to be flush with a bottom face of the cavity 16. As a result, gap of the injection molding die has a stepped cross-sectional shape and has a substantially uniform width. The high-temperature liquid resin injected from the spool 11 is filled into the gap between the lower die 13 and the upper die 14 radially outwardly and then, is cooled so as to form the disk substrate 1 for the hub type optical disk K2.

In the injection molding die of the above described arrangement, the inner clamp 13b acts also as a die for forming the recess 2 of the disk substrate 1. Therefore, the injection molding die can be structurally simplified and a concentric groove which is formed on the disk substrate by the inner clamp in prior art injection molding dies can be eliminated.

## Claims

1. A hub type optical disk (K4) comprising:
a pair of disk substrates (1) each of which has a center hole (1a), a clamp area (1b) disposed radially outwardly of the center hole (1a) and a data area (1c) disposed radially outwardly of the clamp area (1b);
wherein a recess (2) is formed at an inner peripheral portion of one face of each of the disk substrates (1), which includes the clamp area (1b), while a projection (1A) is formed in the clamp area (1b) on the other face of each of the disk substrates (1) such that thickness of each of the disk substrates (1) is substantially uniform at the clamp area (1b) and the data area (1c); and
a hub (31) which is engageable with a disk mounting member (105a) of an optical disk apparatus and is secured in the recess (2);
the recess (2) having a guide face (2a) for receiving an outer periphery (31b) of the hub (31);
wherein the disk substrates (1) are attached to each other so as to enclose the hub (31).

2. An optical disk cartridge comprising:
a hub type optical disk (K4) as claimed in claim 1, and
a cartridge (4) in which the optical disk (K4) is accomodated such that the other face of each of the disk substrates (1) is brought into contact, at the projection (1A), with the cartridge (4).

3. An injection molding die for performing injection molding of a disk substrate (1) of a hub type optical disk (K4) as claimed in claim 1 by using a stamper (12), the injection molding die comprising:
a lower die (13) to which the stamper (12) is secured;
a clamp (13b) for clamping an inner peripheral portion of the stamper (12) to the lower die (13) such that the clamp (13b) acts also as a die for molding the recess (2); and
an upper die (14) in which a portion (16) confronting the clamp (13b) has a shape corresponding to that of the clamp (13b).

## Patentansprüche

1. Optische Platte (K4) mit einer Nabe enthaltend:
ein Plattensubstratpaar (1), wobei jedes Plattensubstrat ein Mittenloch (1a), einen Klemmbereich (1b), der radial auswärts von dem Mittenloch (1a) angeordnet ist, sowie einen Datenbereich (1c) aufweist, der radial auswärts von dem Klemmbereich (1b) vorgesehen ist,
wobei eine Ausnehmung (2) an einem innenliegenden Umfangsabschnitt einer Seite jedes Plattensubstrates (1) ausgebildet ist, die den Klemmbereich (1b) umfaßt, während ein Vorsprung (1A) in dem Klemmbereich (1b) an der anderen Seite jedes der Plattensubstrate (1) in der Weise ausgebildet ist, daß die Dicke jedes der Plattensubstrate (1) in dem Klemmbereich (1 b) und in dem Datenbereich (1c) im wesentlichen gleichförmig ist, und
eine Nabe (31), die mit einem Plattenhalteelement (105a) eines optischen Plattengerätes in Eingriff bringbar und in der Ausnehmung (2) gehalten ist, wobei die Ausnehmung (2) eine Führungsfläche (2a) zur Aufnahme eines äußeren Umfangs (31b) der Nabe (31) aufweist, und
wobei die Plattensubstrate (1) in der Weise aneinander befestigt sind, daß sie die Nabe (31) umschließen.

2. Plattenschlitten für ein optisches Gerät enthaltend:
eine optische Platte (K4) mit einer Nabe nach Anspruch 1, und
einen Schlitten (4), in dem die optische Platte (K4) in der Weise aufgenommen ist, daß die andere Seite jedes der Plattensubstrate (1) an dem Vorsprung (1A) in Kontakt mit dem Schlitten (4) gebracht wird.

3. Spritzgießform zum Ausführen eines Spritzgießvorganges für ein Plattensubstrat (1) einer optischen Platte (K4) mit einer Nabe nach Anspruch 1 unter Verwendung einer Prägeeinrichtung (12), wobei die Spritzgießform enthält:
eine untere Form (13), an der die Prägeeinrichtung (12) befestigt ist,
eine Klemmeinrichtung (13b) zum Klemmen eines innenliegenden Umfangsabschnitts der Prägeeinrichtung (12) an der unteren Form (13) in der Weise, daß die Klemmeinrichtung (13b) ebenfalls als Form zum Gießen der Ausnehmung (2) dient, und
eine obere Form (14), bei der ein Abschnitt (16), welcher der Klemmeinrichtung (13b) gegenüberliegt, eine Form aufweist, die der der Klemmeinrichtung (13b) entspricht.

## Revendications

1. Disque optique du type à moyeu (K4) comprenant :
une paire de substrats de disque (1) dont chacun comporte un trou central (1a), une zone de serrage (1b) disposée radialement vers l'extérieur du trou central (1a) et une zone de données (1c) disposée radialement vers l'extérieur de la zone de serrage (1b),
dans lequel un évidement (2) est formé au niveau d'une partie périphérique intérieure d'une première face de chacun des substrats de disque (1), qui comprend la zone de serrage (1b), alors qu'une saillie (1A) est formée dans la zone de serrage (1b) sur l'autre face de chacun des substrats de disque (1) de sorte que l'épaisseur de chacun des substrats de disque (1) est pratiquement uniforme au niveau de la zone de serrage (1b) et de la zone de données (1c), et
un moyeu (31) qui peut être mis en prise avec un élément de montage de disque (105a) d'un appareil à disque optique et est fixé dans l'évidement (2),
l'évidement (2) comportant une face de guidage (2a) destinée à recevoir une périphérie extérieure (31b) du moyeu (31),
dans lequel les substrats de disque (1) sont fixés l'un à l'autre de façon à enfermer le moyeu (31).

2. Cartouche à disque optique comprenant :
un disque optique du type à moyeu (K4) selon la revendication 1, et
une cartouche (4) dans laquelle le disque optique (K4) est logé de façon à ce que l'autre face de chacun des substrats de disque (1) soit amenée jusqu'en contact, au niveau de la saillie (1A), avec la cartouche (4).

3. Matrice de moulage par injection destinée à exécuter le moulage par injection d'un substrat de disque (1) d'un disque optique du type à moyeu (K4) selon la revendication 1 en utilisant une empreinte (12), la matrice de moulage par injection comprenant :
une matrice inférieure (13) à laquelle l'empreinte (12) est fixée,
un dispositif de serrage (13b) destiné à serrer une partie périphérique intérieure de l'empreinte (12) sur la matrice inférieure (13) de sorte que le dispositif de serrage (13b) agisse également en tant que matrice pour le moulage de l'évidement (2), et
une matrice supérieure (14) dans laquelle une partie (16) face au dispositif de serrage (13b) présente une forme qui correspond à celle du dispositif de serrage (13b).
